Europäisches Patentamt

European Patent Office

Office européen des brevets

(11) Veröffentlichungsnummer: **0 038 059**
**B1**

(12) **EUROPÄISCHE PATENTSCHRIFT**

(45) Veröffentlichungstag der Patentschrift:
**06.02.85**

(51) Int. Cl.⁴: **B 23 D 79/02,** B 29 C 37/04

(21) Anmeldenummer: **81102805.9**

(22) Anmeldetag: **12.04.81**

(54) **Stemm- oder Abstechmaschine.**

(30) Priorität: **12.04.80 DE 3014139**

(43) Veröffentlichungstag der Anmeldung:
**21.10.81 Patentblatt 81/42**

(45) Bekanntmachung des Hinweises auf die Patenterteilung:
**06.02.85 Patentblatt 85/6**

(84) Benannte Vertragsstaaten:
**AT BE CH DE FR GB IT LI NL SE**

(56) Entgegenhaltungen:
**DD - A - 136 715**

(73) Patentinhaber: **Maurus, Leonhard, Blattergasse 9 1/3,
D-8940 Memmingen (DE)**

(72) Erfinder: **Maurus, Leonhard, Blattergasse 9 1/3,
D-8940 Memmingen (DE)**

(74) Vertreter: **Voigt, Otto, Dipl.-Ing., Am Pfannenstiel 14,
D-8900 Augsburg (DE)**

## Beschreibung

Die Erfindung betrifft eine Stemm- oder Abstechmaschine zum Entgraten von Schweissnähten von vornehmlich aus Kunststoff-Profilen geschweissten vieleckigen Rahmen, mit einer Anlagefläche, an der das zu bearbeitende Werkstücke an einen Anschlagwinkel angelegt und mittels zweier Haltezylinder unverrückbar gehalten wird und mit einem durch eine elektrische, hydraulische oder pneumatische Vorschubvorrichtung in der Bearbeitungsebene verschiebbaren Werkzeugträger, an dem der das Stemm- oder Stecheisen tragende Werkzeughalter auf Druck nach oben nachgiebig befestigt ist. Die Erfindung geht damit von einem druckschriftlich nicht erfassten Stand der Technik aus.

Beim Schweissen von Bauwerksteilen wie Rahmen für Fenster und Türen oder Gittern von Wänden entstehen an den Aussenflächen Wülste und Grat, welche nicht nur die Sichtfläche verunzieren, sondern auch die Reinigung behindern. Sie müssen daher beseitigt werden. Früher geschah dies durch Schleifen oder Fräsen, was einen erheblichen Zeitaufwand ergab.

Bis zu 80% des hierfür benötigten Zeitaufwandes kann mit einer in jüngster Zeit entwickelten Stemm- oder Abstechmaschine eingespart werden. Diese besteht aus einem Ständer mit einer Tischplatte, welche die Auflagefläche für den zu bearbeitenden Rahmen bildet, der nach dem Auflegen gegen einen an seine Aussenkanten angreifenden Anschlag gedrückt wird. Mit Hilfe von zwei hydraulisch oder pneumatisch senkrecht nach unten arbeitenden Haltezylindern wird der Rahmen auf der Tischplatte bzw. Auflagefläche unverrückbar festgehalten.

Der an einem vertikalen Traggestell höhenverschieblich angebrachte Werkzeugträger mit seiner Vorschubvorrichtung wird nun auf die Arbeitshöhe (= Profilhöhe) justiert und fixiert.

Diese Maschinen weisen im Vergleich zum Nutzen einen beträchtlichen Aufwand an Material- und Herstellkosten auf und sind dementsprechend teuer. Ein Nachteil besteht ferner darin, dass beim Übergang auf andere Profilhöhen bzw. Arbeitshöhen Rüstzeiten anfallen. Das Anschlagen des Rahmens an seinem Aussenrand ergibt als weiteren Nachteil, dass dei V-förmig verlaufenden Schweissnähte von rechtwinklig anstossenden Stäben (z.B. Kämpferanschlüsse) mit dieser Maschine nicht bearbeitet werden können. Diese Nähte müssen nach wie vor von Hand geschliffen oder gefräst werden. Ferner hat die bekannte Maschine keine Hubbegrenzung.

Die Aufgabe der vorliegenden Erfindung besteht darin, eine leicht zu handhabende Stemm- oder Abstechmaschine mit geringstem Aufwand an Material und Herstellkosten zu schaffen, bei der die Mängel und Nachteile der bekannten stationären Maschine beseitigt sind. Ferner soll der Nutzen dadurch verdoppelt werden können, dass die beiden Schweissnähte auf der Aussen- und Innenseite eines Rahmenstosses zu gleicher Zeit, also in einem Arbeitsgang bearbeitet werden können.

Die Stemm- und Abstechmaschine gemäss vorliegender Erfindung ist in der Weise handhabungsfähig ausgebildet, dass an einem oberen Joch der Werkzeugträger mit seiner Vorschubvorrichtung, die Anlagefläche sowie mindestens ein Haltegriff angebracht sind, und dass dieses Joch durch zwei Stangen mit einem parallel zur oberen Anlagefläche angeordneten unterem Joch verbunden ist.

Da die Maschine nach der Erfindung als Handgerät wesentlich kleiner ausgebildet ist als die vorbekannte Ständermaschine, ergeben sich dieser gegenüber bedeutende Einsparungen an Material- und Fertigungskosten, so dass die gesamten Herstellungskosten mindestens um 60% geringer sind. Aber auch das Arbeiten mit diesem Gerät wird ergonomisch wesentlich verbessert, denn es müssen nicht die oftmals recht sperrigen Rahmen, z.B. die Gitterrahmen von Wänden, geschwenkt und gewendet werden, sondern man kann mit der kleinen Handmaschine, die auch an einer Hängebahnschiene aufgehängt sein kann, von Schweissstelle zu Schweissstelle gehen bzw. fahren, um die Schweisswülste zu beseitigen. Durch den Anschlag von innen können auch die Schweissnähte der rechtwinklig angeschlossenen Profilstäbe (Kämpfer, Querriegel u.dgl.) gleichermassen bearbeitet werden. Da der zu bearbeitende Rahmen beim Einspannen von unten nach oben gedrückt wird, stellt die Maschine sich selbständig auf die verschiedenen Profilhöhen ein.

Im folgenden wird die Erfindung an zwei Ausführungsbeispielen erläutert. Die zugehörigen Zeichnungen zeigen in

Fig. 1 eine Stemm- und Abstechmaschine mit einem Werkzeugträger in der Frontansicht (Blickrichtung des Pfeiles A in Fig. 3),

Fig. 2 eine Seitenansicht der Maschine nach Fig. 1 (Blickrichtung des Pfeiles B in Fig. 3),

Fig. 3 den Grundriss der Maschine nach Fig. 1 und 2,

Fig. 4 eine Stemm- und Abstechmaschine mit zwei Werkzeugträgern in Frontansicht (Blickrichtung des Pfeiles C in Fig. 6),

Fig. 5 die Seitenansicht der Maschine nach Fig. 4 (Blickrichtung des Pfeiles D in Fig. 6) und

Fig. 6 die Maschine nach Fig. 4 und 5 im Grundriss.

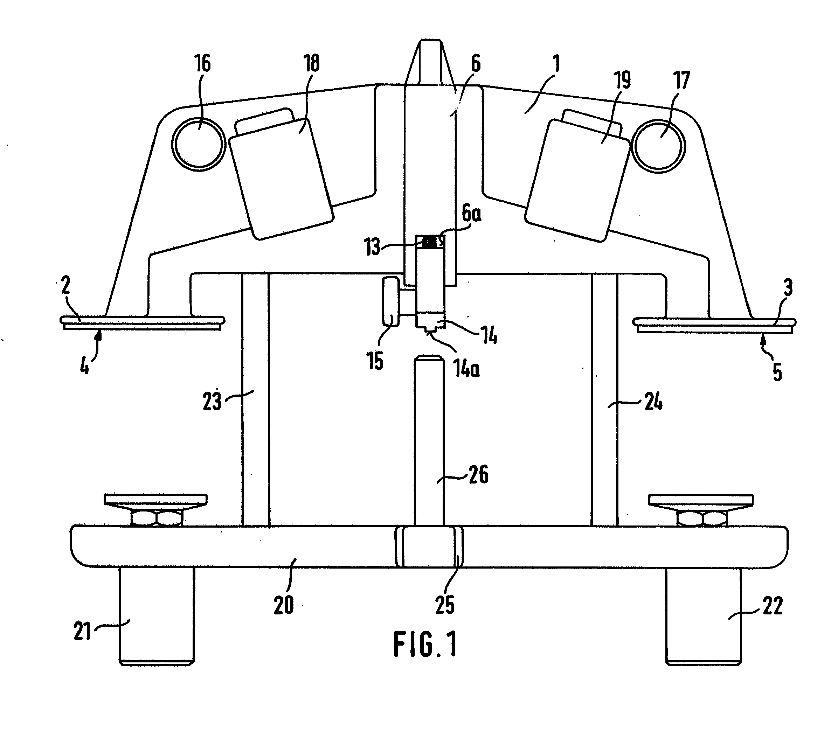

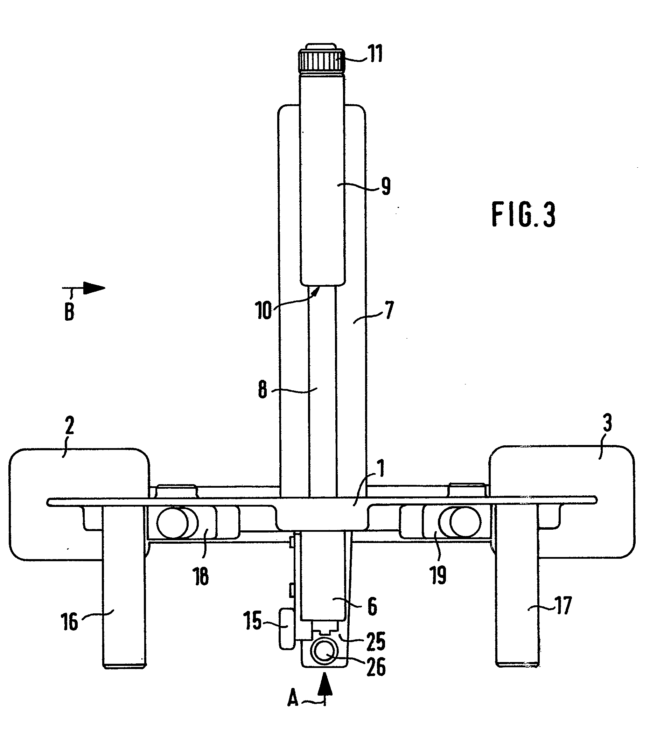

In den Fig. 1 bis 3 bezeichnet 1 das obere Joch mit den Flanschen 2, 3 an denen durch präzise Unterpassung mittels Giessharz die Auflageflächen 4, 5 angebracht sind. Rechtwinklig zur Ebene des Joches 1 ist der Werkzeugträger 6 mit der pneumatischen Vorschubvorrichtung 7 befestigt und mit der Führungsstange 8 in einer entsprechenden Bohrung im Joch 1 geführt. Das freie Ende der Führungsstange 8 ist mit einem nichtdargestellten Gewinde versehen, auf dem die Gewindehülse 9, deren freie Stirnfläche den Anschlag 10 für die Hubbegrenzung bildet, verstellbar gelagert ist. Mit der Gegenmutter 11 wird der eingestellte Hub fixiert. Ohne Verwendung von Endschaltern wird mit diesen wenigen mechanisch wirkenden Elementen eine kontinuierliche Hubeinstellung ermöglicht. In der an der Unterseite des Werkzeugträgers 6 eingearbeiteten Nut 6a ist der Werkzeughalter nach oben schwenkbar und mittels Feder 13 nachgiebig gelagert und geführt. An seiner Unterseite ist das Stemm- oder Schneideisen 14 befestigt, und an einer Seite ist die Führungsrolle 15 drehbar gelagert, mit der die Schneide 14a des Schneideisens 14 geringen Höhenabweichungen in der Bearbeitungsfläche nachgeführt wird. Ausserdem sind am oberen Joch 1 die Griffe 16, 17 und unmittelbar daneben die Druckluftschalter 18, 19 mit Druckknopfbetätigung angebracht, mit denen die pneumatische Vorschubvorrichtung 7 und die auf dem unteren Joch 20 angebrachten, ebenfalls pneumatisch arbeitenden Haltezylinder 21, 22 durch Daumendruck in und ausser Betrieb gesetzt werden können.

Die Stangen 23 und 24 verbinden das obere Joch 1 mit dem unteren Joch 20. Sie bilden zugleich zusammen mit dem an dem Kragarm 25 befestigten parallelen Bolzen 26 den Anschlagwinkel des Gerätes, wobei der Bolzen 26 den Scheitelpunkt festlegt. Da letzterer vor der Schneide des Schneideisens 14 liegt, schützt er diese zugleich vor Beschädigungen in der Ruhestellung. Infolge des Anschlages an die Innenkanten bzw. -flächen des zu bearbeitenden Rahmens, können mit dieser Maschine auch die im V-Winkel verlaufenden Nähte von Kämpfer- oder Querriegelanschlüssen genauso bearbeitet werden wie die übrigen Eckstösse. Es ist lediglich zu beachten, dass ein Schenkel dieses V's nur halb so lang ist als die Diagonale beim Eckstoss. Durch Verstellen des Anschlages 10 wird der kürzere Hub leicht eingestellt.

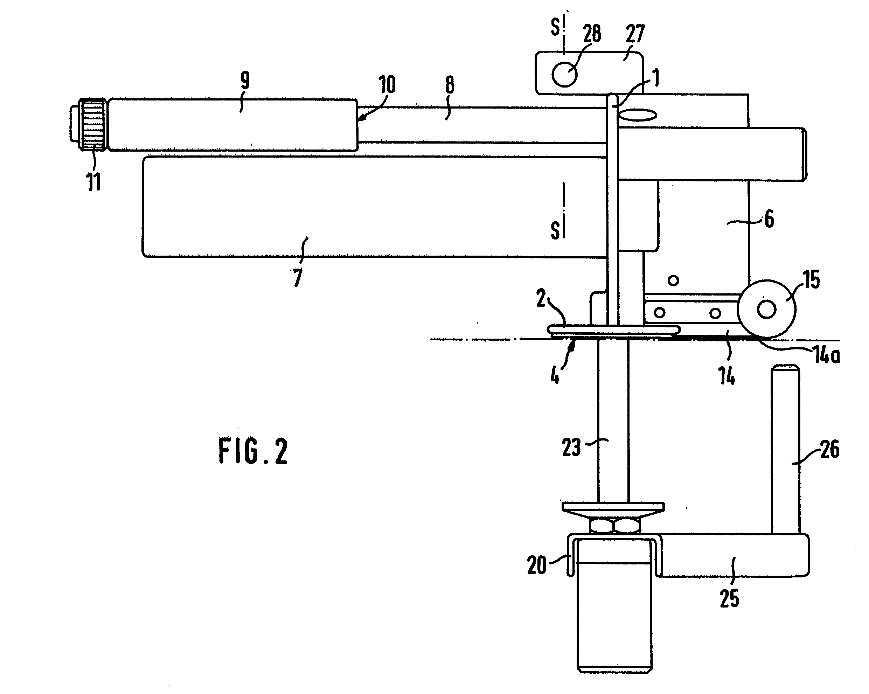

Wie vor allem aus Fig. 2 ersichtlich, ist an der Oberkante des oberen Jochs 1 in der senkrechten Mittelebene quer zur Jochebene ein Tragsteg 27 mit der Tragöse 28 angebracht, deren Mittelpunkt genau in der Schwerachse S ÷ S der Maschine liegt. Diese Anordnung wirkt sich ergonomisch äusserst günstig aus, indem man diese Öse mit der Laufrolle einer nichtdargestellten Hängebahnschiene verbindet. Es bedarf nunmehr keines nennenswerten Kraftaufwandes um die Maschine von einer Schweissstelle zur anderen zu befördern.

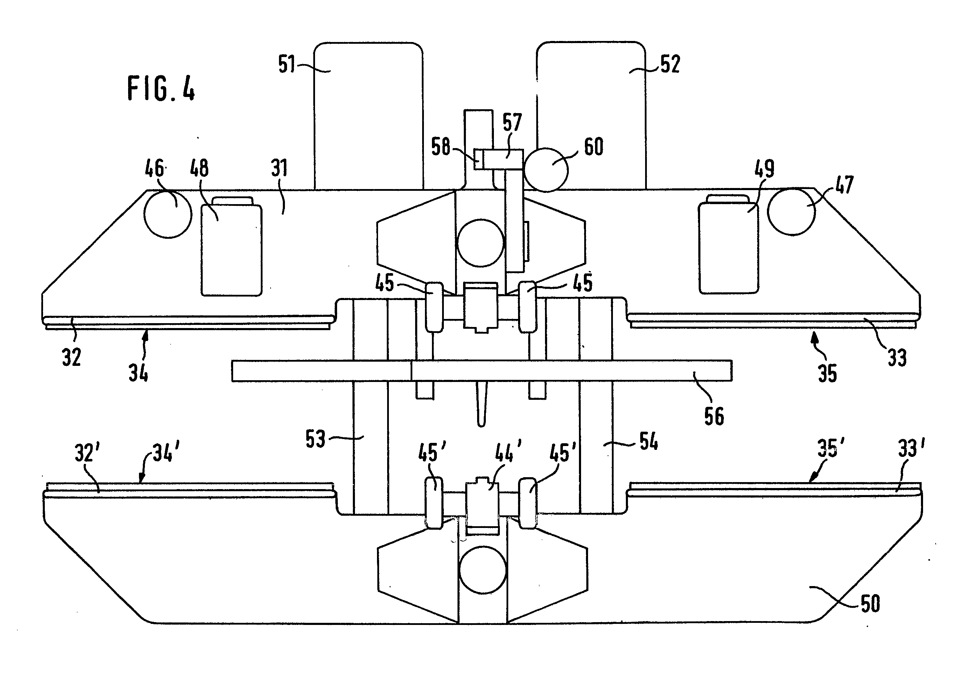

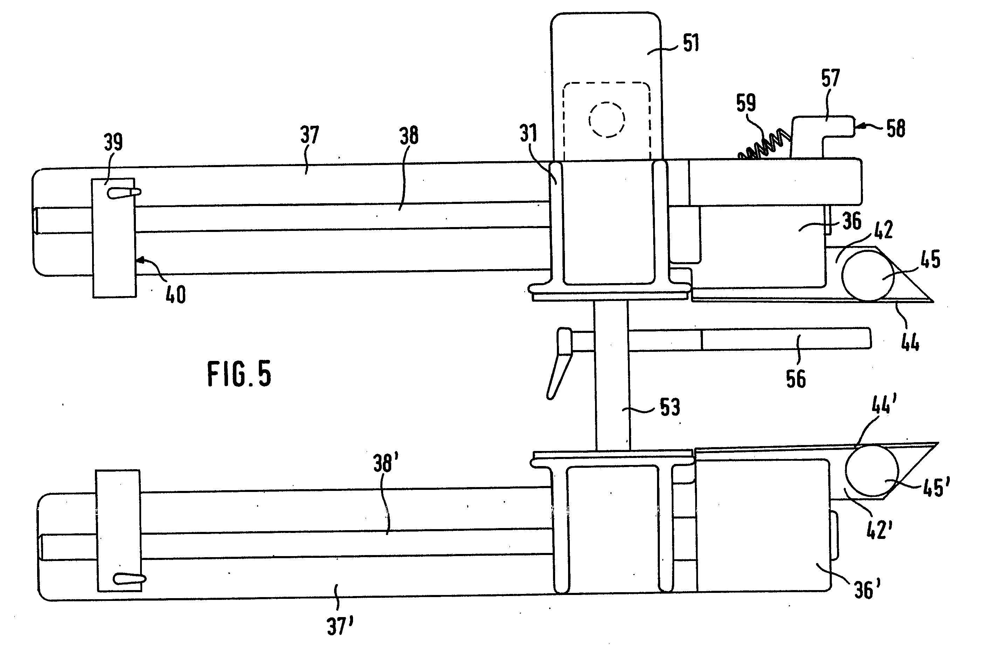

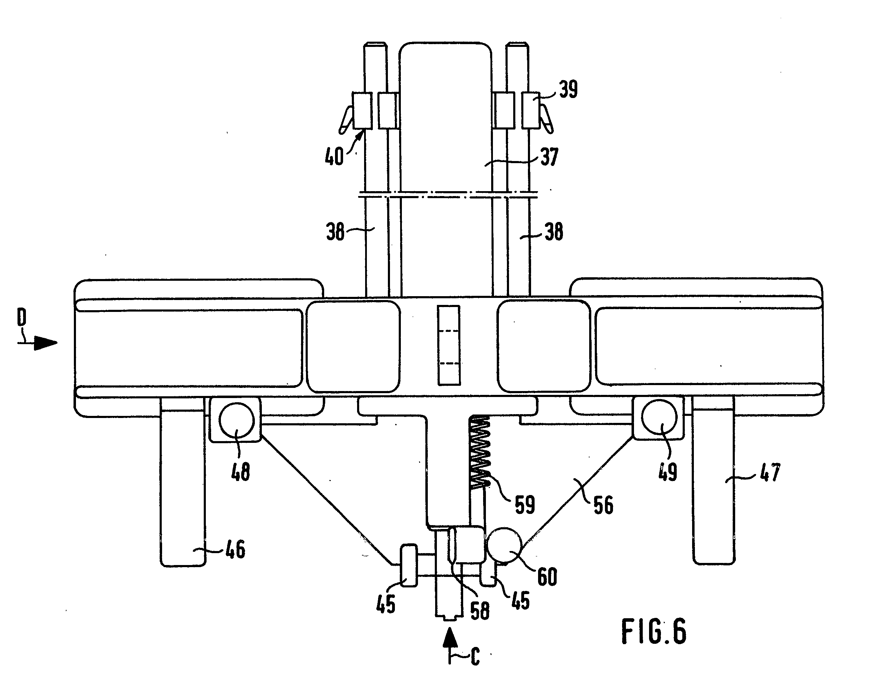

In den Fig. 4 bis 6 bezeichnet 31 das obere Joch mit den Flanschen 32, 33 und den Auflageflächen 34, 35, dem Werkzeugträger 36 mit der pneumatischen Vorschubvorrichtung 37 sowie den Führungsstangen 38. Mit Ausnahme der Führungsstangen sind diese Teile analog den Teilen 1 bis 7 in der Ausführung gemäss Fig. 1 bis 3 angeordnet. Im Unterschied hierzu wird der Anschlag 40 zur Hubbegrenzung von dem Klemmring 39 gebildet.

Als Anschlag für den zu bearbeitenden Rahmen dient das Trapez 56 aus Blech oder Profilstäben, das wiederum unterhalb des Werkzeugträgers 36 angeordnet ist, so dass es an die Innenflächen des zu bearbeitenden Rahmens anschlägt.

Ausserdem ist bei dieser Maschine der Werkzeugträger 36 um seine horizontale Führungsachse um wenige Winkelgrade (ca. 5 bis 6°) schwenkbar gelagert, und der Werkzeughalter ist zu beiden Seiten mit je einer Führungsrolle 45, 45' mit balligen Laufflächen versehen. Dadurch ist es möglich, Stösse von in der Höhe geringfügig voneinander abweichenden Profilen einwandfrei zu bearbeiten, da die Schneide des Stemm- oder Schneideisens 44 entsprechend dem Höhenunterschied schräg eingestellt wird.

Bei dieser Maschine ist das untere Joch 50 mit einem Werkzeugträger 36', mit Vorschubvorrichtung 37', Werkzeughalter 42' und einem Stemmoder Schneideisen 44' in identischer Ausführung wie beim oberen Joch 31 versehen. Die Haltezylinder 51 und 52 sind jedoch am oberen Joch 31 angebracht, und ihre kolbenstangen 53, 54 sind mit dem unteren Joch 50 verbunden. Beim Einschalten der Haltezylinder 51, 52 mit dem Druckluftschalter 48 wird also das ganze untere Joch 50 angehoben und an dem zu bearbeitenden Rahmen zum Anschlag gebracht, wobei zugleich beide Stemm- oder Schneideisen 44, 44' in ihre Arbeitsebenen gebracht werden. Mit dieser Maschine werden somit beide Nähte eines Stosses gleichzeitig bearbeitet. Um die Materialkosten und das Gewicht sowie die Herstellungskosten zu minimieren, können beide Vorschubvorrichtungen 37, 37' von einem gemeinsamen, nichtdargestellten Vorschubzylinder betätigt werden.

Besonders bei Gerippen bzw. Fachwerken von Aussenwänden treten nicht selten Eckstösse mit von 90° abweichenden Winkeln auf. Da man aber nicht für jeden Winkel einen besonderen Anschlagwinkel bereithalten kann, ist bei der Maschine nach Fig. 4 bis 6 zum Ausrichten des Rahmens auf die Schweissnaht ein kleiner, schwenkbar gelagerter Winkelhebel 57 mit einer Richtschneide 58 an seinem freien Ende vorgesehen. Die Feder 59 hält den Winkelhebel 57 in seinen Endlagen und der Kugelkopf 60 dient zu seiner Betätigung. Zum Bearbeiten eines Eckstosses mit von 90° abweichendem Winkel wird der Rahmen zunächst hochgefahren und nur leicht gespannt, so dass er noch verschoben werden kann. Der Winkelhebel 57 wird nun umgelegt, und der Rahmen wird so verschoben bzw. verrückt, dass die Richtschneide 58 genau auf Mitte schweissnaht zu liegen kommt. Bei den Schweissnähten von Kunststoffprofilen bilden sich bekanntlich zwei Aufwölbungen, die im Querschnitt eine Kimme bilden. Liegt die Richtschneide in der Kerbe dieser Kimme, dann wird der zu bearbeitende Rahmen unverrückbar festgespannt.

Für das Glätten von Schweissnähten aus Werkstoffen höherer Festigkeit, wird die Vorschubvorrichtung zweckmässig mit einem nichtdargestellten Schlagwerk, wie es von Presslufthämmern bekannt ist, ausgestattet. Dieses wird zweckmässig zwischen dem Vorschubzylinder und dem Werkzeugträger 6 oder 36 bzw. 36' angeordnet.

Selbstverständlich hat auch diese Maschine, die naturgemäss schwerer ist als die nach Fig. 1 bis 3, eine Aufhängevorrichtung analog zu dieser Maschine.

## Patentansprüche

1. Stemm- oder Abstechmaschine zum Entgraten von Schweissnähten von vornehmlich aus Kunststoff-Profilen geschweissten vieleckigen Rahmen, mit einer Anlagefläche, an der das zu bearbeitende Werkstück an einen Anschlagwinkel angelegt und mittels Haltezylindern (21, 22; 51, 52) unverrückbar gehalten wird und mit einem durch eine elektrische, hydraulische oder pneumatische Vorschubvorrichtung (7; 37, 37') in der Bearbeitungsebene verschiebbaren Werkzeugträger (6; 36, 36') an dem der das Stemm- oder Stecheisen (14; 44, 44') tragende Werkzeughalter (12; 42, 42') auf Druck nach oben nachgiebig befestigt ist, dadurch gekennzeichnet, dass das Gerät in der Weise handhabungsfähig ausgebildet ist, dass an einem oberen Joch (1) der Werkzeugträger (6) mit seiner Vorschubvorrichtung (7), die Anlageflächen (4, 5) sowie mindestens ein Haltegriff (16, 17) angebracht sind, und dass dieses Joch (1) durch zwei Stangen (23, 24) mit einem parallel zur oberen Anlagefläche (4, 5) angeordneten unterem Joch (20) verbunden ist.

2. Stemm- oder Abstechmaschine nach Anspruch 1, dadurch gekennzeichnet, dass der Anschlagwinkel so angeordnet ist, dass er an die Innenflächen des zu bearbeitenden Rahmens anschlägt.

3. Stemm- oder Abstechmaschine nach Anspruch 2, dadurch gekennzeichnet, dass der Anschlagwinkel von den beiden Stangen (23, 24) sowie einem davor angeordneten, seinen Scheitel bestimmenden Anschlagbolzen (26) gebildet ist.

4. Stemm- oder Abstechmaschine nach Anspruch 2, dadurch gekennzeichnet, dass der Anschlagwinkel von den Seitenflächen eines Trapezes (56) aus Blech oder Profilstäben gebildet ist.

5. Stemm- oder Abstechmaschine nach einem der Ansprüche 1 bis 4, dadurch gekennzeichnet, dass Schalter (18, 19) für die Haltezylinder (21, 22) und für die Vorschubvorrichtung (7) unmittelbar neben den Haltegriffen (16, 17) angeordnet sind.

6. Stemm- oder Abstechmaschine nach einem der Ansprüche 1 bis 5, dadurch gekennzeichnet, dass die Vorschubvorrichtung eine beliebig einstellbare Hubbegrenzung (gewindehülse 9, Anschlag 10, Gegenmutter 11) aufweist.

7. Stemm- oder Abstechmaschine nach einem der Ansprüche 1 bis 6, dadurch gekennzeichnet, dass am oberen Joch (1) ein bis in die vertikale Schwereachse (S ÷ S) der Maschine reichender Tragsteg (27) mit einer Tragöse (28) zum Aufhängen angebracht ist.

8. Stemm- oder Abstechmaschine nach einem der Ansprüche 1 bis 7, dadurch gekennzeichnet, dass der Werkzeugträger (36) um einige Winkelgrade um seine horizontale Achse schwenkbar gelagert ist, und dass zu beiden Seiten des Werkzeughalters (42) je eine Führungsrolle (45) mit balliger Lauffläche angebracht ist.

9. Stemm- oder Abstechmaschine nach einem der Ansprüche 1 bis 8, dadurch gekennzeichnet, dass das untere Joch (50) ebenfalls mit einem Werkzeugträger (36') versehen ist, der spiegelbildlich zum oberen angeordnet ist, und dass die Haltezylinder (51, 52) am oberen Joch (31) befestigt sind, deren Kolbenstangen (53, 54) mit dem unteren Joch (30) verbunden sind.

10. Stemm- oder Abstechmaschine nach Anspruch 9, dadurch gekennzeichnet, dass beide Vorschubeinrichtungen (37, 37') einen gemeinsamen Vorschubzylinder haben.

11. Stemm- oder Abstechmaschine nach einem der Ansprüche 1 bis 10, dadurch gekennzeichnet, dass bei Rahmen mit von 90° abweichenden Winkeln zum Ausrichten des Schneideisens (44) auf die Schweissnaht am Werkzeugträger (36) ein Winkelhebel (57) schwenkbar angebracht ist, an dessen freiem Schenkel eine Richtschneide (58) angebracht ist.

12. Stemm- oder Abstechmaschine nach einem der Ansprüche 1 bis 11, dadurch gekennzeichnet, dass die Vorschubvorrichtung(en) mit je einem Schlagwerk ausgestattet ist bzw. sind.

## Claims

A chiseling or trimming machine, intended in particular for deburring welding seams of welded polygonal frames, predominantly made up of shaped elements, having a support surface on which the piece to be trimmed is placed against an arresting bracket and held immovably by means of holder cylinders and having a tool carrier displaceable in the working plane by means of an electric, hydraulic or pneumatic transport device, on which tool carrier the tool holder carrying the chiseling or trimming tool is upwardly yielding in response to pressure, characterized in that the appliance is embodied as capable of being manipulated in such a manner that the tool carrier (6) along with its transport device (7), the support surfaces (4, 5) and at least one handle (16, 17) are attached to an upper crosspiece (1), and that this crosspiece (1) is connected by two rods (23, 24) with a lower crospiece (20) disposed parallel to the upper support surface (4, 5).

2. A chiseling or trimming machine as defined by claim 1, characterized in that the arresting bracket is disposed in such a manner that it strikes against the inner faces of the frame to be trimmed.

3. A chiseling or trimming machine as defined by claim 2, characterized in that the arresting bracket is embodied by the two rods (23, 24) as well as a stop bolt (26) disposed previous thereto which determines its apex.

4. A chiseling or trimming machine as defined by claim 2, characterized in that the arresting bracket is embodied by the side surfaces of a trapeze (56) of sheet metal or shaped rods.

5. A chiseling or trimming machine as defined by one of the claims 1–4, characterized in that the switches (18, 19) for the holder cylinders (21, 22) and for the transport device (7) are disposed directly beside the handles (16, 17).

6. A chiseling or trimming machine as defined by one of the claims 1–5, characterized in that the transport device has an arbitrarily adjustable stroke-limiting means (threaded sleeve 9, stop 10, check nut 11).

7. A chiseling or trimming machine as defined by one of the claims 1–6, characterized in that a support rib (27) extending into the vertical axis of gravity (S + S) of the machine and having a support eyelet (28) for suspension purposes is attached to the upper crosspiece (1).

8. A chiseling or trimming machine as defined by one the claims 1–7, characterized in that the tool carrier (36) is supported in a manner such that it is pivotable by several degrees of angle about its horizontal shaft, and that one guide roller (45) having a convex rolling surface is attached at either side of the tool holder (42).

9. A chiseling or trimming machine as defined by one of the claims 1–8, characterized in that the lower crosspiece (50) (sic) is likewise provided with a tool carrier (36′), which is disposed in mirror-image fashion to the upper tool carrier, and that the holder cylinders (51, 52) are secured on the upper crosspiece (31), their piston rods (53, 54) being connected to the lower crosspiece (30).

10. A chiseling or trimming machine as defined by claim 9, characterized in that both transport devices (37, 37′) have a common transport cylinder.

11. A chiseling or trimming machine as defined by one of the claims 1–10 intended in particular for deburring plastic welding seams, characterized in that in the case of frames having angles deviating from 90°, an angular element (57) is pivotably attached to the tool carrier (36) for the purpose of aligning the cutting die (44) with the welding seam, an aligning cutter (58) being attached to the free arm of this angular element.

12. A chiseling or trimming machine as defined by one of the claims 1–11, characterized in that the transport device(s) is or are each equipped with a striking mechanism.

**Revendications**

1. Machine à mortaiser ou à tronçonner pour l'ébavurage de cordons de soudure de cadres polygonaux formés principalement par soudage de profilés en matière plastique, comportant une surface d'appui sur laquelle la pièce à usiner est appliquée contre une cornière de butée et est maintenue sans pouvoir bouger au moyen de cylindres de maintien (21, 22; 51, 52), ainsi qu'un porte-outil (6; 36, 36′) pouvant être déplacé par un dispositif d'avance électrique, hydraulique ou pneumatique (7; 37, 37′) dans le plan d'usinage, et sur lequel le support d'outil (12; 42, 42′) portant l'outil de mortaisage ou de tronçonnage (14; 44, 44′) est fixé de façon à s'infléchir vers le haut en pression, caractérisée en ce que l'appareillage est agencé pour la manipulation de telle sorte que sur une culasse supérieure (1) soient disposés le porte-outil (6) avec son dispositif d'avance (7), les surfaces d'appui (4, 5) ainsi qu'au moins une poignée de retenue (16, 17) et en ce que cette culasse (1) est reliée par deux barres (23, 24) à une culasse inférieure (20) disposée parallèlement à la surface supérieure d'appui (4, 5).

2. Machine à mortaiser ou à tronçonner selon la revendication 1, caractérisée en ce que la cornière de butée est disposée de manière à s'appliquer contre les surfaces intérieures du cadre à usiner.

3. Machine à mortaiser ou à tronçonner selon la revendication 2, caractérisée en ce que la cornière de butée est constituée par les barres (23, 24) ainsi que par une broche de butée (26) placée en avant et déterminant son sommet.

4. Machine à mortaiser ou à tronçonner selon la revendication 2, caractérisée en ce que la cornière de butée est constituée par les surfaces latérales d'un trapèze (56) en tôle ou en barres profilées.

5. Machine à mortaiser ou à tronçonner selon une des revendications 1 à 4, caractérisée en ce qu'il est prévu des contacteurs (18, 19) pour les cylindres de maintien (21, 22) et pour le dispositif d'avance (7) immédiatement à côté des poignées de maintien (16, 17).

6. Machine à mortaiser ou à tronçonner selon une des revendications 1 à 5, caractérisée en ce que le dispositif d'avance comporte une limitation de course réglable à volonté (manchon fileté 9, butée 10, contre-écrou 11).

7. Machine à mortaiser ou à tronçonner selon une des revendications 1 à 6, caractérisée en ce qu'il est prévu sur la culasse supérieure (1) un voile porteur (27) s'étendant jusqu'à l'axe vertical de gravité (S ÷ S) de la machine et muni d'une oreille (28) pour la suspension.

8. Machine à mortaiser ou à tronçonner selon une des revendications 1 à 7, caractérisée en ce que le porte-outil (36) est monté de façon à pouvoir pivoter de quelques degrés autour de son axe horizontal et en ce qu'il est prévu des deux côtés du porte-outil (42) respectivement un galet de guidage (45) comportant une surface de roulement sphérique.

9. Machine à mortaiser ou à tronçonner selon une des revendications 1 à 8, caractérisée en ce que la culasse inférieure (50) est également pourvue d'un porte-outil (36′), qui est disposé symétriquement par rapport à la culasse supérieure et en ce que les cylindres de maintien (51, 52) sont fixés sur la culasse supérieure (31) et leurs tiges de pistons (53, 54) sont reliées à la culasse inférieure (30).

10. Machine à mortaiser ou à tronçonner selon la revendication 9, caractérisée en ce que les deux dispositifs d'avance (37, 37′) comportent un cylindre d'avance commun.

11. Machine à mortaiser ou à tronçonner selon une des revendications 1 à 10, caractérisée en ce que, dans le cas d'un cadre comportant des angles différant de 90°, il est prévu sur le porte-outil (36), pour l'alignement de l'outil de coupe (44) avec le cordon de soudure, un levier coudé (57) monté de façon pivotante et sur la branche libre duquel est disposée une arête d'alignement (58).

12. Machine à mortaiser ou à tronçonner selon une des revendications 1 à 11, caractérisée en ce que le ou les dispositifs d'avance sont respectivement équipés d'un mécanisme de percussion.

FIG.1

FIG.2

FIG.3

FIG. 4

FIG.5

FIG.6